# DEMANDE DE BREVET EUROPEEN

(11) **EP 2 388 632 A1**
(43) Date de publication de la demande: **23.11.2011**
(21) Numéro de dépôt: 11166803.4
(22) Date de dépôt: 19.05.2011
(51) Int. Cl.: G02B 6/46, G02B 6/44

(54) **Boitier de raccordement de fibres optiques**

(30) Priorité: 20.05.2010 FR 1053916
(71) Demandeur: Nexans, 75008 Paris (FR)
(72) Inventeur: Renard, Xavier, 78410, AUBERGENVILLE (FR); Apere, Rodolphe, 78570, ANDRESY (FR); Milanowski, Michel, 60540, ANSERVILLE (FR); Monatlik, Jean-Christophe, 92150, SURESNES (FR)
(74) Mandataire: Gauer, Pierre

(57) **Abrégé**

L'invention a pour objet un boîtier (4) de raccordement de fibres optiques d'un câble principal à des fibres optiques d'un utilisateur, le boîtier (4) comprenant un corps de boîtier (5) et au moins une cassette (1) de lovage de fibres et de maintien d'épissures, chaque cassette (1) étant délimitée par une bordure inférieure (1a) et une bordure supérieure (1b) sensiblement planes, la bordure inférieure (1a) et la bordure supérieure (1b) étant reliées par une bordure latérale (2), la cassette (1) étant montée en liaison pivot sur le corps de boîtier (5) au moyen d'une charnière, caractérisé en ce que la charnière est située à l'intérieur du cylindre s'appuyant sur la surface extérieure de la bordure latérale (2) de la cassette (1), et en ce que, la charnière étant constituée par l'assemblage d'au moins un support (3) de charnière issu de la cassette (1) et d'au moins un support (7) de charnière issu du corps de boîtier (5), chaque support (3) de charnière issu de la cassette (1) est situé dans le prolongement de la bordure latérale (2) de la cassette (1).

## Description

La présente invention a pour objet un boîtier de raccordement de fibres optiques. Elle concerne en particulier un boîtier compact permettant de raccorder des fibres optiques d'un utilisateur à des fibres optiques issues d'un câble d'acheminement de fibre optiques, le boîtier comprenant au moins une cassette de lovage de fibres et de maintien d'épissures.

Les boîtiers de raccordement de fibres optiques sont destinés à raccorder des fibres optiques d'un câble principal à des fibres optiques d'un câble secondaire, par exemple à des fibres optiques d'un utilisateur.

Les boîtiers de raccordement comprennent généralement au moins une cassette de lovage de fibres et de maintien d'épissures. La cassette est une boîte de lovage et de protection de fibres optiques et souvent également de protection de raccords entre les fibres optiques lovées. De telles cassettes sont utilisées pour le raccordement d'un câble optique ou de différents câbles optiques à des jarretières optiques. Chaque cassette est affectée à deux fibres optiques à raccorder l'une à l'autre ou à plusieurs fibres à raccorder individuellement à plusieurs autres fibres.

On cherche à réduire autant que possible la taille de ces boîtiers. On cherche notamment à intégrer une cassette de lovage de fibres et de maintien d'épissures dans un boîtier de raccordement de fibres optiques le plus compact possible.

L'invention vise à atteindre ces objectifs.

L'invention a ainsi pour objet un boîtier de raccordement de fibres optiques d'un câble principal à des fibres optiques d'un utilisateur, le boîtier comprenant un corps de boîtier et au moins une cassette de lovage de fibres et de maintien d'épissures, chaque cassette étant délimitée par une bordure inférieure et une bordure supérieure sensiblement planes, la bordure inférieure et la bordure supérieure étant reliées par une bordure latérale, la cassette étant montée en liaison pivot sur le corps du boîtier au moyen d'une charnière.

Dans le boîtier selon l'invention, la charnière est située à l'intérieur du cylindre s'appuyant sur la surface extérieure de la bordure latérale de la cassette, et, la charnière étant constituée par l'assemblage d'au moins un support de charnière issu de la cassette et d'au moins un support de charnière issu du corps de boîtier, chaque support de charnière issu de la cassette est situé dans le prolongement de la bordure latérale de la cassette.

Le cylindre est une fiction mathématique. Il est défini comme étant la surface formée par une droite qui se déplace parallèlement à elle-même en s'appuyant sur la surface extérieure de la bordure latérale de la cassette.

Ce positionnement particulier de la charnière, à l'intérieur du cylindre engendré par la cassette, permet un gain de place dans le boîtier et permet d'intégrer la cassette dans des petits boîtiers.

La charnière peut être située à l'intérieur ou en dehors de l'espace compris entre le plan de la bordure inférieure et le plan de la bordure supérieure.

La charnière peut être reliée à la bordure inférieure ou à la bordure supérieure de la cassette.

Chaque support de charnière issu du corps de boîtier peut être issu d'une face interne du corps de boîtier.

La charnière peut être constituée par l'assemblage de deux supports de charnière issus de la cassette et de deux supports de charnière issus du corps de boîtier.

Le boîtier peut comprendre un ou deux raccords de fibres optiques apte(s) à être relié(s) au câble principal et à un connecteur d'un utilisateur.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1 est une vue de face d'une cassette utilisée dans un boîtier selon l'invention, et
- la figure 2 est une vue en perspective d'une partie du boîtier.

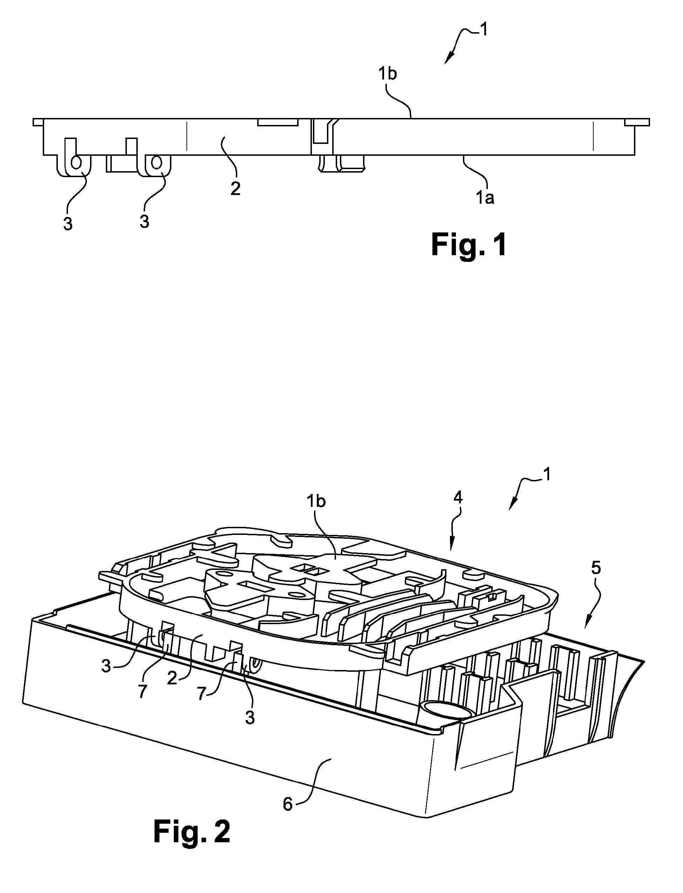

La cassette 1, telle qu'illustrée à la figure 1, comprend une bordure inférieure la et une bordure supérieure 1b horizontales sensiblement planes délimitant une épaisseur de la cassette, ainsi qu'une bordure latérale verticale 2. La bordure latérale 2 est reliée à deux supports 3 de charnière. Les supports 3 de la cassette 1 comprennent deux orifices et sont destinées à coopérer avec deux supports mâles de charnière correspondants du boîtier, de manière à former une charnière qui permet le pivotement de la cassette 1.

Les supports 3 de charnière issus de la cassette 1 sont dans un plan situé hors de l'épaisseur de la cassette 1. Les supports 3 de charnière de la cassette 1 sont situés en dessous de la bordure inférieure la. Ils peuvent en particulier être situés dans le prolongement de la bordure latérale 2. La bordure de chaque support 3 de charnière issu de la cassette 1 peut ainsi être alignée avec (située dans un même plan que) la bordure latérale 2.

La figure 2 illustre une partie d'un boîtier 4 selon l'invention. Le boîtier 4 comprend un corps de boîtier 5 muni d'une bordure latérale 6. Deux supports 7 de charnière issus de la face interne de la bordure latérale 6 coopèrent avec les deux supports 3 de charnière issus de la cassette 1 pour former une charnière. La charnière est ainsi située sous la cassette 1, entre la cassette 1 et le corps de boîtier 5, à l'intérieur du cylindre s'appuyant sur la surface extérieure de la bordure latérale 2 de la cassette 1.

Le boîtier 4 comprend également un couvercle destiné à recouvrir le corps de boîtier 5 et au moins un raccord de fibres optique apte à être relié au câble principal et à un connecteur d'un utilisateur. Pour des raisons de clarté, le couvercle et le raccord ne sont pas représentés.

L'invention permet d'intégrer des cassettes dans des petits boîtiers standard de largeur égale à 80 mm. Ce type de boîtier peut par exemple être un boîtier comprenant un unique raccord de fibres optique. Ce type de boîtier est particulièrement adapté au raccordement des zones d'habitation peu denses.

La cassette 1 doit généralement intégrer un logement d'épissures de 45 mm. Le rayon de courbure de part de part et d'autre de l'épissure doit être de deux fois 15 mm. Au total, ces fonctions imposent une largeur minimum de 75 mm pour la cassette 1. Si l'on veut intégrer la cassette 1 dans un boîtier 4 de largeur égale à 80 mm, il ne reste donc que 5mm pour intégrer les épaisseurs de la bordure 6 du boîtier 4 et de la bordure 2 de la cassette 1. La charnière étant positionnée sous la cassette 1, à l'intérieur du cylindre s'appuyant sur la surface extérieure de la bordure latérale 2 de la cassette 1, elle n'occupe pas de largeur supplémentaire, ce qui permet de loger la cassette dans les 80 mm de largeur.

## Revendications

1. Boîtier (4) de raccordement de fibres optiques d'un câble principal à des fibres optiques d'un utilisateur, le boîtier (4) comprenant un corps de boîtier (5) et au moins une cassette (1) de lovage de fibres et de maintien d'épissures, chaque cassette (1) étant délimitée par une bordure inférieure (1a) et une bordure supérieure (1b) sensiblement planes, la bordure inférieure (1a) et la bordure supérieure (1b) étant reliées par une bordure latérale (2), la cassette (1) étant montée en liaison pivot sur le corps de boîtier (5) au moyen d'une charnière, **caractérisé en ce que** la charnière est située à l'intérieur du cylindre s'appuyant sur la surface extérieure de la bordure latérale (2) de la cassette (1), et **en ce que**, la charnière étant constituée par l'assemblage d'au moins un support (3) de charnière issu de la cassette (1) et d'au moins un support (7) de charnière issu du corps de boîtier (5), chaque support (3) de charnière issu de la cassette (1) est situé dans le prolongement de la bordure latérale (2) de la cassette (1).

2. Boîtier (4) selon la revendication 1, **caractérisé en ce que** la charnière est située en dehors de l'espace compris entre le plan de la bordure inférieure (1a) et le plan de la bordure supérieure (1b).

3. Boîtier (4) selon la revendication 1 ou 2, **caractérisé en ce que** la charnière est reliée à la bordure inférieure (1a) ou à la bordure supérieure (1b) de la cassette (1).

4. Boîtier (4) selon l'une des revendications 1 à 3, **caractérisé en ce que** chaque support (7) de charnière issu du corps de boîtier (5) est issu d'une face interne du corps de boîtier (5).

5. Boîtier (4) selon l'une des revendications 1 à 4, **caractérisé en ce que** la charnière est constituée par l'assemblage de deux supports (3) de charnière issus de la cassette et de deux supports (7) de charnière issus du corps de boîtier (5).

6. Boîtier (4) selon l'une des revendications 1 à 5, **caractérisé en ce qu'**il comprend un ou deux raccords de fibres optiques apte(s) à être relié(s) au câble principal et à un connecteur d'un utilisateur.

## Revendications modifiées

### Revendications modifiées conformément à la règle 137(2) CBE.

**1.** Boîtier (4) de raccordement de fibres optiques d'un câble principal à des fibres optiques d'un utilisateur, le boîtier (4) comprenant un corps de boîtier (5) et au moins une cassette (1) de lovage de fibres et de maintien d'épissures, chaque cassette (1) étant délimitée par une bordure inférieure (1a) et une bordure supérieure (1b) sensiblement planes, la bordure inférieure (1a) et la bordure supérieure (1b) étant reliées par une bordure latérale (2), la cassette (1) étant montée en liaison pivot sur le corps de boîtier (5) au moyen d'une charnière, **caractérisé en ce que** la charnière est située à l'intérieur de la surface formée par une droite qui se déplace parallèlement à elle-même en s'appuyant sur la surface extérieure de la bordure latérale (2) de la cassette (1), la charnière étant située en dehors de l'espace compris entre le plan de la bordure inférieure (1a) et le plan de la bordure supérieure (1b) de la cassette (1), et **en ce que**, la charnière étant constituée par l'assemblage d'au moins un support (3) de charnière issu de la cassette (1) et d'au moins un support (7) de charnière issu du corps de boîtier (5), chaque support (3) de charnière issu de la cassette (1) est situé dans le prolongement de la bordure latérale (2) de la cassette (1) et **en ce que** la bordure de chaque support (3) de charnière issu de la cassette (1) est située dans un même plan que ladite bordure latérale (2).

**2.** Boîtier (4) selon la revendication 1, **caractérisé en ce que** la charnière est reliée à la bordure inférieure (1a) ou à la bordure supérieure (1b) de la cassette (1).

**3.** Boîtier (4) selon la revendication 1 ou 2, **caractérisé en ce que** chaque support (7) de charnière issu du corps de boîtier (5) est issu d'une face interne du corps de boîtier (5).

**4.** Boîtier (4) selon l'une des revendications 1 à 3, **caractérisé en ce que** la charnière est constituée par l'assemblage de deux supports (3) de charnière issus de la cassette et de deux supports (7) de charnière issus du corps de boîtier (5).

**5.** Boîtier (4) selon l'une des revendications 1 à 4, **caractérisé en ce qu'**il comprend un ou deux raccords de fibres optiques apte(s) à être relié(s) au câble principal et à un connecteur d'un utilisateur.
